# EUROPÄISCHE PATENTSCHRIFT

(11) **EP 0 839 677 B1**
(45) Veröffentlichungstag und Bekanntmachung des Hinweises auf die Patenterteilung: **12.06.2002**
(21) Anmeldenummer: 96810735.9
(22) Anmeldetag: 05.11.1996
(51) Int. Cl.: B60G 21/05, B60B 35/02

(54) **Radaufhängung**
Wheel suspension
Suspension de roues

(43) Veröffentlichungstag der Anmeldung: 06.05.1998
(73) Patentinhaber: Alcan Technology & Management AG, 8212 Neuhausen am Rheinfall (CH)
(72) Erfinder: Habich, Heiko, 78224 Singen (DE)

(56) Entgegenhaltungen:
- EP-A- 0 133 829
- EP-A- 0 229 591
- EP-A- 0 713 791
- WO-A-92/07748
- DE-A- 3 426 942
- DE-A- 3 636 878
- FR-A- 2 581 594
- FR-A- 2 701 901
- GB-A- 2 297 733
- US-A- 4 165 098

## Beschreibung

Vorliegende Erfindung betrifft eine Radaufhängung für Strassenfahrzeuge, insbesondere Halbstarrachsen ohne Antrieb für Personenkraftwagen und leichte Nutzfahrzeuge, enthaltend einen Querträger, Achsträger oder Koppellenker und an beiden Enden des Quer- oder Achsträgers oder des Koppellenkers befestigte Längslenker, wobei der Längslenker Mittel zur Befestigung am Fahrzeug und Mittel zur Radaufnahme enthalten. Eine derartïge Radaufhängung gemäß dem Oberbegriff des Anspruchs 1 ist aus der EP-A-0 713 791 bekannt.

Je nach Art der Federung und des Radantriebes an Kraftfahrzeugen, wie Personenkraftwagen oder leichten Nutzfahrzeugen, verwendet man verschiedene Konstruktionen von Radaufhängungen. Zu den weit verbreiteten Radaufhängungen für die Hinterräder gehören die Starrachsen und Halbstarrachsen. Insbesondere bei Fahrzeugen mit Frontantrieb kann die Hinterachse einfach gestaltet werden. Deshalb haben sich aus der Reihe der Starrachsen oder präziser, der Halbstarrachsen die Verbundlenkerachse, die Koppellenkerachse und die Torsionslenkerachse in den Bereichen der Radaufhängungen für frontgetriebene Fahrzeuge durchgesetzt.

Bei diesen Achskonstruktionen sind die Hinterräder am rückwärtigen Ende -- in Fahrtrichtung gesehen -- an Längslenkern aufgehängt Die Längslenker sind bei der Verbundlenkerachse an ihrem frontseitigen Ende gegenseitig über einen Querträger aus Federstahl verschweisst. Bei der Koppellenkerachse sind die Längslenker etwa in deren Mitte gegenseitig mit einem Achsträger aus einem torsionsweichem U-Stahlprofil zusammengeschweisst. Bei der Torsionslenkerachse sind die Längslenker an ihrem rückwärtigen Ende über einen Torsionslenker gegenseitig verbunden.

Aus der EP-A-0 713 791 oder aus der FR-A- 2 701 901 sind Kraftfahrzeug-Hinderachsen bekannt, aus Längslenkern und Querstrebe. Keine dieser Ausführungsformen gibt eine Lehre an, in welcher Weise z.B. die Federung oder Stossdämpfung angeordnet werden.

Neben der altbekannten Forderung, die ungefederten Massen möglichst gering zu halten, steht eine Gewichtsverminderung insgesamt der Fahrzeuge zur Diskussion. Eine weitere Forderung besteht darin, die Zahl unterschiedlicher Konstruktionselemente an einem Fahrzeug zu vermindern und die Zahl von Gleichteilen zu erhöhen.

Aufgabe vorliegender Efindung ist es, diesen Forderungen Rechnung zu tragen und eine Radaufhängung zu beschreiben, die leicht ist, mit einer grossen Zahl von Gleichteilen verschiedensten Anforderungen gerecht wird und in Elementbauweise vorgefertigt werden kann.

Erfindungsgemäss wird dies gemäss der Lehre des Anspruches 1 erreicht. Die abhängigen Ansprüche beschreiben besonders günstige Ausführungsformen.

Die Längslenker der erfindungsgemässen Radaufhängung sind bevorzugte Teile einer Verbundlenkerachse oder einer Torsionslenkerachse oder einer Koppellenkerachse.

Die Längslenker der erfindungsgemässen Radaufhängung sind beispielsweise Strangpress-5 profile aus Leichtmetall mit in Längslenker-Längsrichtung laufendem Strangpressgefüge.

Die Längslenker weisen einen nach innen, zur Fahrzeugmitte weisenden Profilansatz auf. Der Profilansatz ist beispielsweise ein Rinnenprofil oder ein C-Profil.

In seiner einfachsten Form ist der Längslenker ein Einkammerhohlprofil mit polygonalem und zweckmässig rechteckigem oder quadratischem Querschnitt. Der Profilansatz stellt vom inneren Wandstreifen des Längsträgers ausgehende, resp. abragende, First- und Bodenstreifen dar. Der First- und/oder Bodenstreifen kann mit einer Winkelkante abkragen, im Falle, dass First- und Bodenstreifen mit einer Winkelkante abkragen wird ein C-förmiger Profilansatz am Ein- oder Mehrkammerhohlprofil gebildet.

Sinngemäss kann anstelle des Einkammerhohlprofils auch ein Mehrkammer-, wie ein Zweikammer-, Dreikammer-, Vierkammer- usw. -hohlprofil treten.

Am Profilansatz können erste Befestigungsmittel für die Federung und/oder Stossdämpfer und/oder Stabilisatoren usw. angeordnet werden. Solche Befestigungsmittel sind beispielsweise Gusskörper und bevorzugt Abschnitte eines Strangpressprofiles. Die Befestigungsmittel weisen beispielsweise einen Ansatz zur gegenseitigen Befestigung mit dem Längslenker und weitere Mittel zur Befestigung der Aufhängungs- und Federelemente, z.B. einer Feder eines Federtopfes, eines Federbeines, eines Stossdämpfers, eines Stabilisators, eines Querstabes, eines Querstabilisators usw. auf. Die Mittel zur Befestigung können auch derart ausgestaltet sein, dass zwei oder mehrere Aufhängungs- und Federelemente, wie z.B. eine Feder und ein Stossdämpfer oder eine Feder, ein Stossdämpfer und ein Querstabilisator an einem Befestigungsmittel angebracht werden können. Es ist auch möglich an einem Längslenker zwei oder mehrere erste Befestigungsmittel anzuordnen und an jedem Befestigungsmittel ein Aufhängungs- oder Federelement anzubringen.

Die ersten Befestigungsmittel können beispielsweise mit dem Rinnenprofil des Längslenkers formschlüssig sein. Das Befestigungsmittel kann am Längslenker durch Kleben, Schrauben, Nieten, Klemmen oder einer Kombination dieser Verfahren festgelegt werden. Schraubverbindungen werden bevorzugt.

Am Profilansatz können zweite Befestigungsmittel für die Befestigung des Querträgers von Verbundlenkerachsen oder des Torsionslenkers von Torsionslenkerachsen oder des Achsträgers von Koppellenkerachsen usw. angeordnet werden. Solche Befestigungsmittel sind beispielsweise Gusskörper und bevorzugt Abschnitte eines Strangpressprofiles. Die Befesti-gungsmittel weisen beispielsweise einen Ansatz zur gegenseitigen Befestigung mit dem Längslenker und Mittel zur Befestigung, z.B. des Querträgers oder auch Verbundlenker genannt, des Achsträgers oder auch Koppellenker genannt, oder des Torsionslenkers, entsprechend der Konstruktion der Radaufhängung, auf.

Die zweiten Befestigungsmittel können beispielsweise mit dem Rinnenprofil des Längslenkers formschlüssig sein. Das Befestigungsmittel kann am Längslenker durch Kleben, Schrauben, Nieten, Klemmen oder einer Kombination dieser Verfahren festgelegt werden. Schraubverbindungen werden bevorzugt.

Auch diese zweiten Befestigungsmittel können Guss-Stücke oder Strangpressprofile aus Leichtmetall, zweckmässig aus Aluminium, Aluminiumlegierungen, Magnesium oder Magnesiumlegierungen sein.

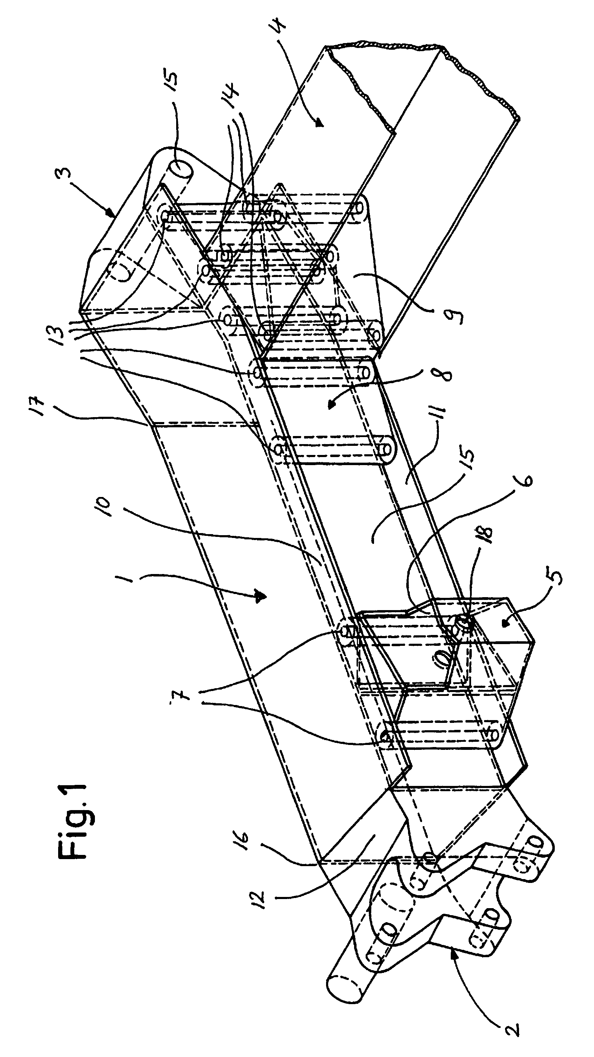

Die Figuren 1 bis 5 illustrieren vorliegende Erfindung beispielhaft anhand einer Verbundlenkerachse näher. In Figur 1 ist der linke Teil einer Verbundlenkerachse gezeigt. Die Verbundlenkerachse enthält einen Längslenker 1, der am vorderen Ende -- in Fahrtrichtung des Fahrzeuges gesehen -- ein Befestigungsteil 3 enthält. Das Befestigungsteil 3 kann beispielsweise ein Schmiede- oder Gussstück oder allenfalls ein Strangpressprofil darstellen, welches am vorderseitigen Ende des Längslenkers 1 festgelegt ist. Das Befestigungsteil 3 kann ein Ansatzstück aufweisen, welches in wenigstens eine der Hohlkammern des Längslenkers eingeschoben werden kann. Das Befestigungsteil 3 kann beispielsweise durch Kleben, Schweissen, Schrauben, Klemmen oder einer Kombination von solchen Befestigungsmöglichkeiten am Längslenker 1 festgelegt werden. In der Regel wird das Befestigungsteil 3 von wenigstens einer Bohrung 15 durchsetzt. Mittels eines Bolzens oder Schraubverbindung kann an jener Stelle die Verbindung zur Fahrzeugkarosserie ausgeführt werden.

Am rückwärtigen Ende des Längslenkers 1 kann ein Formteil zur Radaufnahme 2 und zur Befestigung der Betriebsbremse festgelegt sein. Das Formteil für die Radaufnahme 2 kann wiederum ein Guss- oder Schmiedeteil sein, oder kann fallweise ein Abschnitt eines Strangpressprofiles darstellen. Das Formteil zur Radaufnahme 2 kann ein Ansatzstück aufweisen, welches formschlüssig in wenigstens eine der Kammern, in vorliegendem Fall die eine Kammer 12, des Längslenkers 1 eingeschoben werden kann. Die Radaufnahme 2 kann durch beispielsweise Kleben, Schrauben, Nieten oder Klemmen oder einer Kombination dieser Ausführungsarten am Längslenker festgelegt werden.

Der Längslenker 1 weist auf der zur Fahrzeugmitte weisenden Seite einen Profilansatz in Form eines Rinnenprofiles auf. Der Profilansatz ist gebildet durch den inneren Wandstreifen 15, den Firststreifen 10 und den Bodenstreifen 11. In dieses Rinnenprofil kann beispielsweise ein erstes Befestigungsmittel 5 eingeschoben werden. Die Höhe des Befestigungsmittels 5 entspricht der lichten Weite zwischen Firststreifen 10 und Bodenstreifen 11. In vorliegendem Fall ist das erste Befestigungsmittel 5 ein Strangpressprofil und insbesondere ein Mehrkam-merhohlprofil. Zwei der Kammern stellen zylinderische Ausnehmungen 7 dar. Anstelle der zylindrischen Ausnehmungen 7 können auch Bohrungen angebracht werden. Sowohl an Firststreifen 10 als auch an Bodenstreifen 11 können entsprechende Ausnehmungen angeordnet werden und die Bohrungen 7 und die Ausnehmungen in Firststreifen 11 und Bodenstreifen 10 können durch Schraubbolzen durchsetzt sein. Das erste Befestigungsmittel 5 weist im weiteren eine gegen die Fahrzeugmitte weisende Hohlkammer 6 auf, die etwa mittig der Seitenwände von einer Bohrung durchsetzt ist. Durch Einschieben beispielsweise eines Bolzens oder einer Schraube und sichern mittels einer Mutter oder dergl. kann an jener Stelle ein Radaufhängungsteil, wie ein Stossdämpfer, ein Federbein, eine Federaufnahme, ein Stabilisator usw. festgelegt werden. Es ist auch möglich, an durch eine weitere Bohrung und einen weiteren Bolzen oder am gleichen Bolzen zwei oder mehrere Radaufhängungsteile festzulegen.

Es ist ebenfalls möglich, anstelle nur eines Befestigungsmittels 5 zwei gleiche oder ähnliche Befestigungsmittel 5 vorzusehen, wobei am einen Befestigungsmittel ein erstes Radaufhängungsteil, wie z.B. die Federung, und am anderen Befestigungsmittel ein zweites Radaufhängungsteil, wie z.B. die Stossdämpfung, angelenkt sind.

In Fahrtrichtung gesehen vom vorderen Ende des Längslenkers 1, ist der Querträger 4 durch ein zweites Befestigungsmittel 8 festgelegt. Das zweite Befestigungsmittel 8 kann wiederum beispielhaft ein Strangpressprofil mit mehreren Kammern sein, wobei ein Teil der Kammern 13, 14 eine zylinderische Form aufweisen. Die Kammern 13, 14 können auch Bohrungen sein. Beispielsweise mittels Schrauben oder Bolzen kann das zweite Befestigungsmittels 8 am Längslenker 10 festgelegt werden. Vorteilhaft ist das Befestigungsmittel 8 mit einem Ansatz 9 für den Querträger 4 versehen. Der Ansatz 9 kann beispielsweise formschlüssig in den Querträger 4 eingepasst werden oder zumindest entspricht die Höhe des Befestigungsmittels 8 der lichten Weite zwischen Boden- und Firststreifen des Querträgers 4. Entsprechend den Kammern in Form von Bohrungen am Ansatz 9 des Befestigungsmittels 8 kann der Querträger durch Schrauben oder Bolzen am Ansatzstück festgelegt werden. Es ist möglich, anstelle von Schrauben oder Bolzen die Teile teilweise oder ganz zu verkleben oder zu verschweissen oder die Befestigungsarten zu kombinieren. Bevorzugt ist das Schrauben.

Um das rückwärtige Ende des Längslenkers 1 möglichst nahe an den Radmittelpunkt zu bringen und die Auskragung des Radträgers klein zu halten, kann es zweckmässig sein, den Längslenker 1 geknickt, gekröpft, abgewinkelt oder gebogen auszubilden. In anderer Ausführungsform kann die Radbefestigung 2 und/oder das Befestigungsteil 3 derart am Längslenker 1 festgelegt sein, dass der Längslenker, bezogen auf die Fahrzeuglängsachse, vom Befesti-gungsteil 3 schräg nach aussen zur Radbefestigung 2 läuft. In vorliegender Figur 1 ist beipielhaft der Längslenker 1 gezeigt, der im Bereich seines vorderen Endes parallel zur Längsachse läuft und in diesem Abschnitt das Befestigungsteil 3 aufnimmt und in einem Abstand 17 vom vorderen Ende abgeschrägt oder gekröpft ist. Der Längslenker 1 läuft, bezogen auf die Fahrzeuglängsachse nach schräg aussen und am rückwärtigen Ende des Längslenkers 1 ist die Radbefestigung 2, z.B. durch eine Kröpfung 16 derart angeordnet, dass eine Radachse an der Radbefestigung 2 im gewünschten Winkel zur Fahrzeuglängsachse steht.

Aus Figur 1 erkennbar, dass in vorteilhafter Weise die Befestigungsmittel 5 und 8 an nahezu beliebiger Stelle des Längslenkers 1 angeordnet werden können. Damit gelingt es auch, beispielsweise durch Anordnung eines Achsträgers mittig des Längslenkers eine Koppellenkerachse herzustellen oder durch Anordnung des Torsionslenkers am rückwärtigen Ende des Längslenkers eine Torsionsachse zu schaffen. Das Befestigungsmittel 5 kann ebenfalls an jeder freien Stelle des Längslenkers angeordnet werden und entsprechend den Anforderungen an Federung und Dämpfung können die Anlenkpunkte der Fedeung und Stossdämpfung optimal plaziert werden.

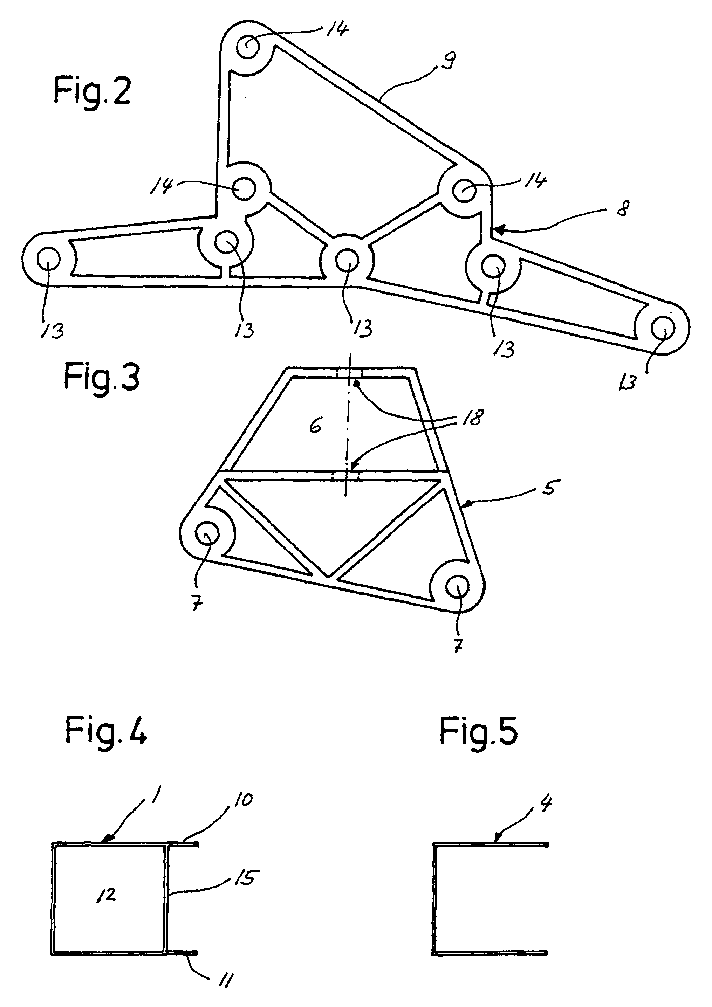

Die Figur 2 zeigt eine Draufsicht auf das zweite Befestigungsmittel 8, in vorliegendem Fall zur Befestigung des Querträgers 4 am Längslenker 1. Beispielsweise kann dies ein Gussoder Schmiedeteil darstellen oder es kann sich um den Abschnitt eines Strangpressprofiles handeln. Das Befestigungsmittel ist durch eine Mehrzahl von Bohrungen 13 durchsetzt, welche die Bolzen oder Schrauben aufnehmen, mit welchen das Befestigungsmittel 8 am Längsträger 1 festgelegt ist. Mit den Bohrungen 13 sind Ausnehmungen, resp. Bohrungen, in Firststreifen 10 und Bodenstreifen 11 in Übereinstimmung und Schrauben oder Bolzen durchdringen die Ausnehmungen in Firststreifen 10, die Bohrungen 13 und die Ausnehmungen in Bodenstreifen 11, um das Befestigungsmittel 8 am Längslenker 1 festzulegen. Das Ansatzstück 9 weist Bohrungen 14 auf. Das Ansatzstück 9 wird in den Hohlraum des Querträgers 4 eingeschoben und mit Schrauben oder Bolzen, welche die Bohrungen 14 und den First- und Bodenstreifen des Querträgers 4 durchsetzen, fixiert.

Die Figur 3 zeigt die Draufsicht auf das erste Befestigungsmittel 5 für die Aufhängungs- und Federelemente. Es handelt sich beispielhaft um ein Strangpressprofil mit mehreren Kammern, wobei die Kammern 7 beispielsweise Bohrungen zur Aufnahme von Bolzen oder Schrauben sind. Die Kammer 6 kann an zwei sich gegenüberliegenden Seitenwänden je eine Ausnehmung 18, wie je eine Bohrung, aufweisen. Diese Bohrungen liegt vorteilhaft auf einer horizontalen Achse. Diese Bohrungen werden vorteilhaft durch die beiden parallelen Wände geführt und sind von einer Schraube oder einem Bolzen durchsetzt. An dieser Schraube oder dem Bolzen kann beispielsweise ein Federbein oder eine Federaufnahme oder ein Stossdämpfer usw. festgelegt sein.

Die Figur 4 zeigt einen Schnitt durch einen Längslenker 1 in einer einfachen Ausführungs-form als ein Einkammerhohlprofil. Die Kammer 12 ist auf einer Seite durch den Wandstreifen 15 begrenzt. Der Firststreifen 10, der Wandstreifen 15 und der Bodenstreifen 11 bilden ein Rinnenprofil aus. Das Rinnenprofil 10, 11, 15 weist zweckmässig gegen die Fahrzeugmitte. Fallweise kann der Firststreifen 10 oder der Bodenstreifen 11 oder sowohl First- 10, als auch Bodenstreifen 11, mit einer Winkelkante abgekragt sein. Damit bildet sich, zumindest im letzteren Falle, ein C-förmiger Anschluss aus. Um Gebrauch von C-förmigem Anschluss machen zu können, müssen an den Befestigungsmitteln 5, 8 vorteilhaft Nuten eingefräst werden, welche es erlauben, die Befestigungmittel 5, in das Rinnenprofil einzuschieben.

Die Figur 5 zeigt beispielhaft einen Schnitt durch den Querträger 4, der ein -- in Fahrtrichtung gesehen -- nach hinten offenes Profil polygonalen Querschnittes bildet Die lichte Weite zwischen den beiden Schenkeln entspricht vorteilhaft genau der Höhe des Ansatzstückes 9 des Befestigungsmittels 8.

Anstelle des offenen Profil 4 kann je nach Achskonstruktion auch ein U-förmiges, V-förmiges Profil oder, mit entsprechenden Befestigungsmitteln 9, ein rohrförmiges Profil vorgesehen werden. Das Profil 4 kann fallweise zur Erhöhung der Torsionsfähigkeit auch Schlitze, Verdrehungen, Verkantungen, Ein- und/oder Ausbeulungen, Abkragungen usw. aufweisen.

Beim Querträger 4 kann es sich, wie beim Längsträger 1, um Strangpressprofile aus Leichtmetall, wie Aluminium und seine Legierungen oder Magnesium und seinen Legierungen handeln. Bei stranggepressten Querträgern kann das Strangpressgefüge in Querträgerlängsrichtung verlaufen. In anderen Ausführungsformen kann der Querträger z.B. auch aus geformtem Blech, insbesondere Aluminiumblech, sein oder aus faserverstärktem, wie glas- oder carbonfaserverstärktem, Kunststoff, aufgebaut sein.

Bevorzugt werden für die angeführten Konstruktionselemente Aluminiumlegierungen des Typs AlMgSi, AlMg, AlMgMn oder AlZnMg. Für die einzelnen Teile einer vorliegenden Radaufhängung kann jeweils die gleiche oder unterschiedliche Aluminiumlegierungen eingesetzt werden.

Entsprechend der Fahrzeugkonstruktion kann die Länge der Längslenker und die Länge der Torsions-, Koppel- oder Verbundlenker gewählt werden. Die Befestigungsmittel können dabei jeweils die gleichen bleiben, und somit wird es möglich, durch eine kleine Zahl von Einzelteilen eine Vielfalt von Achskonstruktionen herstellen zu können. So ist es beispielsweise möglich, die Längslenker entsprechend dem Fahrzeug von einem endlosen Strangpressprofil nach Bedarf abzulängen. Gleiches kann mit dem Querträger geschehen. Entsprechend der verlangten Torsionsfestigkeit kann auch anstelle eines Einkammerlängslenkers ein Mehrkammerlängslenker angewendet werden. Bei den Torsions-, Koppel- oder Verbundlenkern kann durch Form, Material oder Materialdicke die Torsionsstabilität beeinflusst werden. Im Falle, dass die Befestigungsmittel für die Elemente der Aufhängung und Federung oder der Befestigungsmittel für Querträger Strangpressprofile darstellen, können diese entsprechend der Höhe des Längslenkers resp. der lichten Weite zwischen First- und Bodenstreifen, abgelängt werden. Dies führt zu einer rationellen Fertigung einer Vielzahl von Achskonstruktionen. Entsprechend der Einfachheit des Aufbaues und der leichten Austauschbarkeit der Teile der Radaufhängungen können Schäden, z.B. nach Unfällen, auf einfache und preisgünstige Weise repariert werden.

Die Teile der Radaufhängung, insbesondere in Form der Strangpressprofilen, können ohne weitere Behandlung, insbesondere Oberflächenbehandlung eingesetzt werden. Entsprechend den Bedürfnissen ist es aber auch möglich, die Teile aus Aluminiumlegierungen zu anodisieren und/oder zu lackieren oder zu plattieren.

## Patentansprüche

1. Radaufhängung für Strassenfahrzeuge, insbesondere Halbstarrachsen ohne Antrieb für Personenkraftwagen und leichte Nutzfahrzeuge, enthaltend einen Querträger, Achsträger oder Koppellenker und an beiden Enden des Quer- oder Achsträgers oder des Koppellenkers befestigte Längslenker (1), wobei die Längslenker (1) Mittel zur Befestigung am Fahrzeug (3) und Mittel zur Radaufnahme (2) enthalten, und die Längslenker (1) stranggepresste Ein- oder Mehrkammerhohlprofile mit einem zur Fahrzeugmitte weisenden Profilansatz (10, 11) sind,
**dadurch gekennzeichnet, dass**
am Profilansatz (10, 11) erste Befestigungsmittel (5) für die Elemente der Federung und Aufhängung, zweckmässig für die Federung und/oder die Stossdämpfung und/oder für die Stabilisatoren, angeordnet sind,
und
dass am Profilansatz zweite Befestigungsmittel (8) für den Querträger (4) bei Verbundlenkerachsen oder für den Achsträger bei Koppellenkerachsen oder für den Torsionslenker bei Torsionslenkerachsen angeordnet sind.

2. Radaufhängung nach Anspruch 1, **dadurch gekennzeichnet, dass** die Längslenker (1) Teile einer Verbundlenkerachse sind.

3. Radaufhängung nach Anspruch 1, **dadurch gekennzeichnet, dass** die Längslenker (1) Teile einer Koppellenkerachse sind.

4. Radaufhängung nach Anspruch 1, **dadurch gekennzeichnet, dass** die Längslenker (1) Teile einer Torsionslenkerachse sind.

5. Radaufhängung nach Anspruch 1, **dadurch gekennzeichnet, dass** die Längslenker (1) Strangpressprofile mit in Längslenkerlängsrichtung laufendem Strangpressgefüge aus Leichtmetall, zweckmässig aus Aluminium, einer Aluminiumlegierung, Magnesium oder einer Magnesiumlegierung, sind.

6. Radaufhängung nach Anspruch 1, **dadurch gekennzeichnet, dass** der nach innen weisende Profilansatz (10, 11) ein zur Fahrzeugmitte weisendes Rinnenprofil ist.

7. Radaufhängung nach Anspruch 1, **dadurch gekennzeichnet, dass** der nach innen weisende Profilansatz ein C-Profil ist

8. Radaufhängung nach Anspruch 1, **dadurch gekennzeichnet, dass** die Befestigungsmittel (5, 8) Guss-Stücke oder Strangpressprofile aus Leichtmetall, zweckmässig aus Aluminium, Aluminiumlegierungen, Magnesium oder Magnesiumlegierungen, sind.

9. Radaufhängung nach Anspruch 1, **dadurch gekennzeichnet, dass** der Querträger (4), der Torsionslenker oder der Achsträger ein Strangpressprofil aus Leichtmetall, zweckmässig aus Aluminium, Aluminiumlegierungen, Magnesium oder Magnesiumlegierung, ist.

## Claims

1. Wheel suspension for road vehicles, in particular semi-rigid floating axles for passenger cars and light goods vehicles, containing a cross member, axle carrier or dead beam and longitudinal control arms (1) fixed to both ends of the cross member or axle carrier or dead beam, the longitudinal control arms (1) containing means for fixing to the vehicle (3) and means for mounting the wheel (2), and the longitudinal control arms (1) being extruded single-compartment or multicompartment hollow sections with a projection (10, 11) directed towards the centre of the vehicle, **characterised in that** first fixing means (5) for the suspension elements, advantageously for the spring suspension and/or the shock absorber and/or for the stabilisers, are arranged on the projection (10, 11), and that second fixing means (8) for the cross member (4) in the case of compound suspensions or for the axle carrier in the case of dead beam axles or for the torsion beam in the case of torsion beam axles are arranged on the projection.

2. Wheel suspension according to claim 1, **characterised in that** the longitudinal control arms (1) are parts of a compound suspension.

3. Wheel suspension according to claim 1, **characterised in that** the longitudinal control arms (1) are parts of a dead beam axle.

4. Wheel suspension according to claim 1, **characterised in that** the longitudinal control arms (1) are parts of a torsion beam axle.

5. Wheel suspension according to claim 1, **characterised in that** the longitudinal control arms (1) are extruded sections with an extruded structure made of light metal, advantageously aluminium, an aluminium alloy, magnesium or a magnesium alloy, running in the longitudinal direction of the longitudinal control arms.

6. Wheel suspension according to claim 1, **characterised in that** the inwardly directed projection (10, 11) is a channel-shaped section directed towards the centre of the vehicle.

7. Wheel suspension according to claim 1, **characterised in that** the inwardly directed projection is a C-shaped section.

8. Wheel suspension according to claim 1, **characterised in that** the fixing means (5, 8) are castings or extruded sections made of light metal, advantageously aluminium, aluminium alloys, magnesium or magnesium alloys.

9. Wheel suspension according to claim 1, **characterised in that** the cross member (4), the torsion beam or the axle carrier is an extruded section made of light metal, advantageously aluminium, aluminium alloys, magnesium or a magnesium alloy.

## Revendications

1. Montage de roues pour véhicules routiers, en particulier essieux semi-rigides sans entraînement pour des voitures particulières et pour des véhicules utilitaires légers, comportant un support transversal, un support d'essieu ou un bras d'accouplement, et des bras longitudinaux (1) fixés aux deux extrémités du support transversal ou du support d'essieu ou du bras d'accouplement, les bras longitudinaux (1) comprenant des moyens pour la fixation sur le véhicule (3) et des moyens pour l'accommodation des roues (2), et les bras longitudinaux (1) étant des profilés extrudés creux à chambre unique ou multiple avec un talon de profilé (10, 11) dirigé vers le milieu du véhicule, **caractérisé en ce qu'**il est prévu sur le talon de profilé (10, 11) des premiers moyens de fixation (5) pour les éléments de la suspension et du montage, judicieusement pour la suspension et/ou les amortisseurs et/ou pour les stabilisateurs, et **en ce qu'**il est prévu sur le talon de profilé des seconds moyens de fixation (8) pour le support transversal (4) dans le cas des essieux à bras composites ou pour le support d'essieu dans le cas des essieux à bras d'accouplement ou pour le bras de torsion dans le cas des essieux à bras de torsion.

2. Montage de roues selon la revendication 1, **caractérisé en ce que** les bras longitudinaux (1) font partie d'un essieu à bras composites.

3. Montage de roues selon la revendication 1, **caractérisé en ce que** les bras longitudinaux (1) font partie d'un essieu à bras d'accouplement.

4. Montage de roues selon la revendication 1, **caractérisé en ce que** les bras longitudinaux (1) font partie d'un essieu à bras de torsion.

5. Montage de roues selon la revendication 1, **caractérisé en ce que** les bras longitudinaux (1) sont des profilés extrudés à structure d'extrusion s'étendant en direction longitudinale des bras longitudinaux en métal léger, judicieusement en aluminium, en alliage d'aluminium, en magnésium ou en alliage de magnésium.

6. Montage de roues selon la revendication 1, **caractérisé en ce que** le talon de profilé (10, 11) dirigé vers l'intérieur est un profilé à rainure dirigé vers le milieu du véhicule.

7. Montage de roues selon la revendication 1, **caractérisé en ce que** le talon de profilé dirigé vers l'intérieur est un profilé en C.

8. Montage de roues selon la revendication 1, **caractérisé en ce que** les moyens de fixation (5, 8) sont des pièces de fonderie ou des profilés extrudés en métal léger, judicieusement en aluminium, en alliages d'aluminium, en magnésium ou en alliages de magnésium.

9. Montage de roues selon la revendication 1, **caractérisé en ce que** le support transversal (4), le bras de torsion ou le support d'essieu est un profilé extrudé en métal léger, judicieusement en aluminium, en alliages d'aluminium, en magnésium, ou en alliages de magnésium.
